(19)

**Europäisches Patentamt**
**European Patent Office**
**Office européen des brevets**

(11) **EP 4 755 563 A1**

(12) **EUROPEAN PATENT APPLICATION**

(43) Date of publication:
**10.06.2026 Bulletin 2026/24**

(21) Application number: **25220172.8**

(22) Date of filing: **02.12.2025**

(51) International Patent Classification (IPC):
**B23K 9/10** *(2006.01)* **H02M 3/00** *(2006.01)*

(52) Cooperative Patent Classification (CPC):
**B23K 9/1043; B23K 9/1062; H02M 3/156;
H02M 3/33573**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.12.2024 US 202463728461 P
18.11.2025 US 202519392717**

(71) Applicant: **Illinois Tool Works Inc.**
**Glenview IL 60025 (US)**

(72) Inventors:
• **VAHID, Sina**
 **Glenview, 60025 (US)**
• **OTT, Brian**
 **Glenview, 60025 (US)**

(74) Representative: **HGF**
**HGF Limited**
**4th Floor, 1 City Square**
**Leeds LS1 2ES (GB)**

(54) **FAST RESPONSE TRANSFORMER-BASED POWER CONVERTERS FOR ARC WELDING**

(57) Systems and methods are provided for implementing and utilizing fast response transformer-based power converters for arc welding. An example welding-type system may include a wire feeder controller configured for controlling wire feeding functions in the welding-type system, with the wire feeder controller including a power converter. The power converter may use a circuit topology that includes a transformer-based DC-to-DC converter circuit and an output circuit. The transformer-based DC-to-DC converter circuit may have an input circuit and a modulation circuit, with the modulation circuit including a transformer, with the transformer-based DC-to-DC converter circuit configured to not provide galvanic isolation in the output circuit.

**FIG. 3**

## Description

CLAIM OF PRIORITY

This patent application claims priority to and claims benefit from United States Provisional Patent Application Serial No. 63/728,461, filed on December 5, 2024. The above identified application is hereby incorporated herein by reference in its entirety.

BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

In some instances, conventional welding-type systems may have some limitations and/or disadvantages. For example, welding-type systems may have limitations with respect to handling power supply for different types of weld processes.

Further limitations and disadvantages of conventional approaches will become apparent to one skilled in the art, through comparison of such approaches with some aspects of the present systems and methods set forth in the remainder of this disclosure with reference to the drawings.

BRIEF SUMMARY

Aspects of the present disclosure relate to welding solutions. More specifically, various implementations in accordance with the present disclosure are directed to systems and methods for fast response transformer-based power converters for arc welding, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

BRIEF DESCRIPTION OF THE DRAWINGS

Fig. 1 shows an example welding-type setup.

Fig. 2 illustrates an example regulated metal deposition (RMD) process and the corresponding current waveform.

Fig. 3 illustrates different example welding-type systems incorporating transformer-based conversion with output control.

Fig. 4 illustrates different example output control circuits that may be used in transformer-based power converter topologies.

Fig. 5 illustrates different example transformer-based DC-to-DC converter circuits that may be used in transformer-based power converter topologies.

Fig. 6 illustrates example fast response transformer-based power converter topologies based on an alternative design that incorporates full-bridge converter circuit.

Fig. 7 illustrates example fast response transformer-based power converter topologies based on an alternative design that incorporates half-bridge converter circuit.

Fig. 8 illustrates example fast response transformer-based power converter topologies based on an alternative design that incorporates push-pull converter circuit.

Fig. 9 illustrates example fast response transformer-based power converter topologies based on an alternative design that incorporates two-switch forward converter circuit.

DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

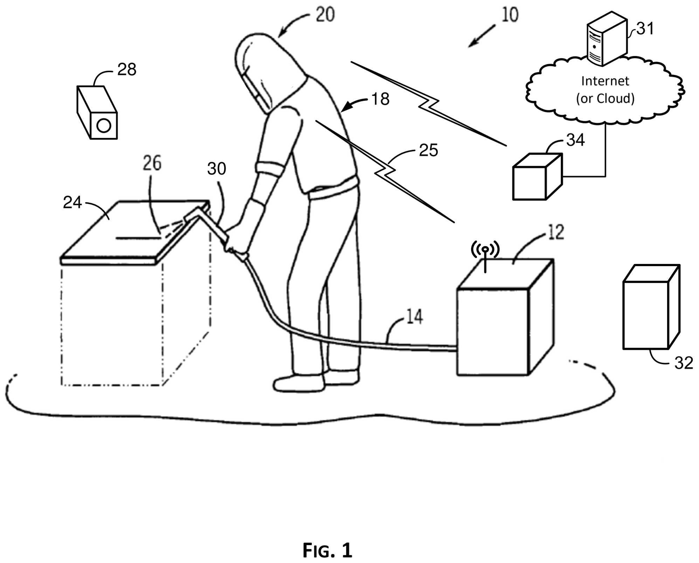

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

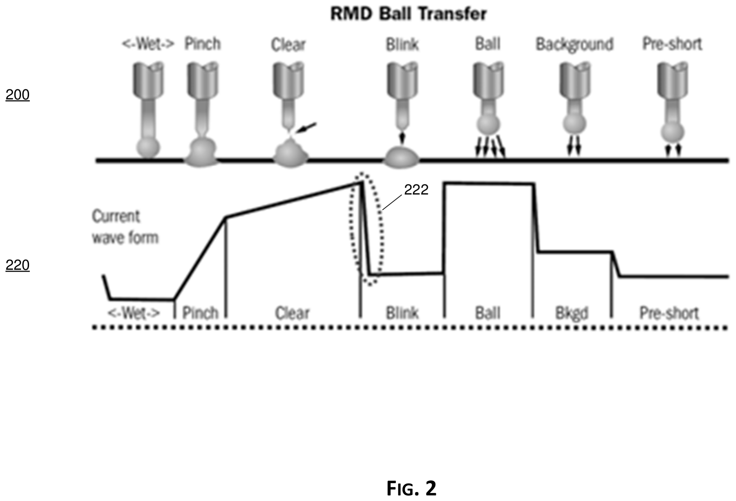

In some instances, welding-type systems or setups may be configured to provide adaptive power control. In this regard, in various welding-type setups or systems, power supply control circuits typically may be used, such as to convert power from a primary source to an output suitable for welding operations, and/or to control the output power. The output power may be provided at an appropriate voltage or current level and may be controlled and regulated, such as according to requirements of the welding process being used. In this regard, some welding processes may require the output to be AC whereas other welding processing may require the output to be DC. Also, welding processes may be high-power processes whereas other welding processes may be low-power processes. In this regard, low-power processes may comprise high speed advanced welding processes, such as Miller's Regulated Metal Deposition (RMD) process. An example of such process is illustrated and described with respect to Fig. 2.

In various implementations, suitable circuitry may be used for handling and/or facilitating providing power that meets the requirements required for use of the welding processes. For example, typical high current AC outputs for gas tungsten arc welding (GTAW) or submerged arc welding (SAW) may require circuitry that efficiently generates a square wave output with a magnitude of several hundreds of amperes.

Various circuit topologies may be used, with these circuit topologies being designed to meet the requirements of the welding processes. For example, circuit topologies designed to meet the requirements set forth above may include a buck converter that steps down a supplied DC voltage, a full-bridge inverter that converts the stepped down DC voltage to an AC output, and an output control circuit to remedy or mitigate undesirable effects or conditions when supplying or stopping the weld current.

Solutions based on the present disclosure provide power supply control circuits that yield improved performance, and/or mitigate or overcome at least some of the some limitations and/or disadvantages of conventional solutions. In particular, in implementations based on the present disclosure, enhanced circuit topologies may be used. In various example embodiments, improved DC-to-DC converters may be combined with output control circuits such as recycler and/or ride-through circuits, to provide enhanced power supply functions.

In this regard, DC-to-DC converters may be used in welding machines, such as after the rectifying stage. Both isolated and non-isolated DC-to-DC converters are used for this purpose. Isolated converters are commonly used to provide galvanic isolation between the user and the input power. In welding equipment for which such insulation is not mandated, non-isolated converters are used. In such equipment, non-isolated DC-to-DC converters may be used at the point of load.

The recycler and/or ride-through circuits may be used to control output power (or current), particularly under certain conditions. In this regard, some weld processes require very fast dynamic response during negative current changes-that is, current drops ($-\Delta i / \Delta t$), particularly where such current drops are rapid/quick. An example of such situations is the RMD process, as illustrated in Fig. 2. The recycler and/or ride-through circuits may allow for handling and/or achieve such desirable $-\Delta i / \Delta t$. In this regard, such circuits may do so using various approaches or techniques. A first approach may be to let the current freewheel (e.g., through inductor, arc, and a control circuit, such as diode). The disadvantage of this approach is the relatively slow and uncontrolled time constant dictated by the circuit that controls the $-\Delta i / \Delta t$. A second approach is to use a ride-through connection (circuit) that is to configured increase the resistance during the $-\Delta i / \Delta t$, to decrease the time constant of the freewheeling circuit. The disadvantage of this approach is that it require use of an extra switch in the circuit that increases losses, and that during normal operation time, the extra switch will require continues cooling. The third method is the use of a recycler circuit (a non-synchronous or a synchronous recycler circuit). Such recycler circuit may comprise a switch on the low-side and a diode (or another switch) at the high-side, with the switch always in the "ON" state, except for when the short is about to clear. At that moment, the switch turns "OFF" and the diode (or high-side switch) conducting the short circuit current back to the DC link.

As noted, implementations based on the present disclosure may yield improved performance and/or may overcome at least some of the limitation of conventional solutions (if any existed). For example, embodiments based on the present disclosure may be better suited for use with low-power processes (e.g., RMD process), which may have lower voltage at the output level than the input. To accommodate such requirements, variations of non-isolated buck converter may be used to step down the input voltage. This may be achieved by, e.g., reducing the duty ratio of the switch gate drive. However, this limits the compatible input voltage range for the converter to weld. As such, a step-down transformer may be used in embodiments based on the present disclosure, with the transformer disposed between the input and output. Such transformer may allow a wider change in duty ratio of the switch which makes the converter compatible with a wider range of voltages (e.g., output voltages of the welding power source, which may be provided or applied in the system as input voltage).

Embodiments based on the present disclosure may also have lower losses in the primary of the circuits. In this regard, using the step-down transformer may enable the circuit to be connected to an input source with higher voltage. Therefore, the circuit may provide higher output current at lower input current. Such reduction in the primary current reduces the conduction losses in the primary side by the factor of current square. Further, lower current demand in the primary reduces the voltage ripple over the primary capacitors to the converter. This may affect the component selection and overall lower losses on the capacitors that enables their operation at lower temperatures.

In addition, use of recycler and ride-through circuits in embodiments based on the present disclosure may also allow for drawing $-\Delta i/\Delta t$ as fast as possible. Although the transformer inherently provides galvanic isolation between the input and output of the transformer, such isolation may not be required. Therefore, the recycler and ride-through circuits may be used to bypass the transformer isolation and enable the rapid decrease of the output current.

Example embodiments in accordance with the present disclosure are described in more detail below.

Fig. 2 illustrates an example regulated metal deposition (RMD) process and the corresponding current waveform. Shown in Fig. 2 is an example RDM process 200 and a current waveform chart 220.

As shown in Fig. 2, the RDM process 200 comprises a sequence of steps and/or actions, starting with, e.g., wet-in step, followed by pinch step, then clear step, then blink step, then ball step, then background step, then pre-short step. The current waveform chart 220 shows the current waveform of the welding current for each of these steps throughout the RDM process 200. As illustrated by current waveform chart 220, there is a fast current drop 222 at the end of the clear step. Other low-power processes may similarly incorporate and/or require such fast current drops.

As described herein, power converters incorporating topology implemented in accordance with the present disclosure may be configured to support and/or handle such fast current drops when performing low-power processes, such as the RDM process 200. This is described in more detail below.

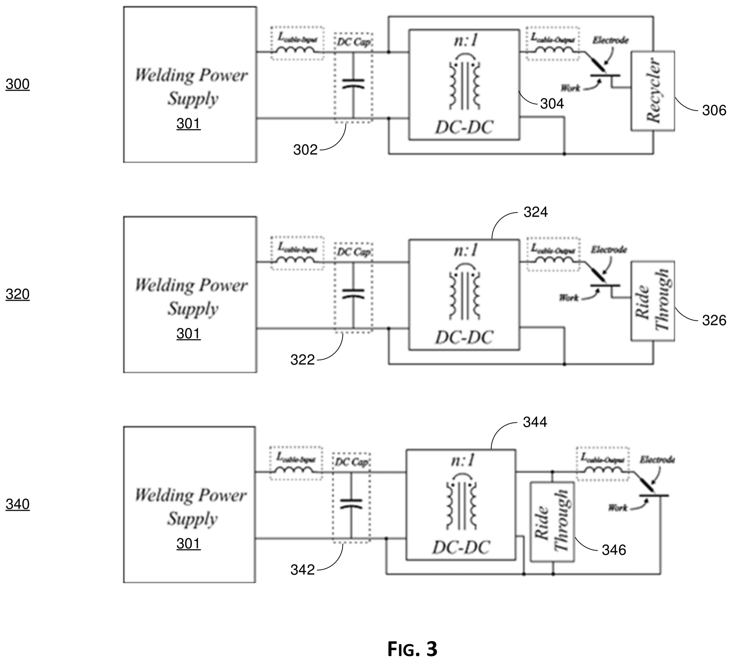

Fig. 3 illustrates different example welding-type systems incorporating transformer-based conversion with output control. Shown in Fig. 3 are welding-type systems (or portions thereof) 300, 320, and 340.

Each of the systems 300, 320, and 340 comprises a transformer-based DC-to-DC converter (e.g., buck converter) configured for use in modulating output weld currents. However, the systems 300, 320, and 340 may utilize different output circuits and techniques for controlling various aspects of the outputting of power. In this regard, the system 300 incorporates transformer-based converter with recycler circuit, system 320 incorporates transformer-based converter with weld ride-through circuit, and system 340 incorporates transformer-based converter with converter output ride-through circuit. In other words, as illustrated in Fig. 3, each of the systems 300, 320, and 340 combines use of a transformer-based converter with a recycler circuit or a ride-through circuit, for controlling power output.

Each of the systems 300, 320, and 340 comprises a welding power supply 301 that provides a DC output. Each of the systems 300, 320, and 340 comprises input circuit-namely, input circuits 302, 322, and 342, which comprise input DC capacitor (link). The welding power supply 301 is connected to each input DC capacitor (link) through a cable with the inductance of $L_{Cable-Input}$. In each of the each of the systems 300, 320, and 340, the input DC capacitor (link) is connected to a transformer-based buck converter-namely, transformer-based buck converters 304, 324, and 344. The output of each of the converters 304, 324, and 344 is connected to the electrode and work through a weld cable with the inductance of $L_{Cable-Output}$. However, the systems 300, 320, and 340 utilized different types of output circuits for controlling the output power.

In the system 300, a recycler circuit 306 is placed in the return path of the weld current such that under normal operation mode the weld current passes through the returns to the ground of the transformer-based buck converter 304. However, when the rapid decrease in the weld current is needed, the recycler circuit 306 changes the current path to pump the excess energy back into the input DC capacitor (link).

In the system 320, a ride-through circuit 326 is placed in series with the weld current path. During normal operation mode, the ride-through circuit 326 acts as a short circuit (switch is "ON"), and when the rapid current decrease is needed for the weld, ride-through circuit 326 adds a resistor in the current path to achieve a higher rate of change for the current.

In the system 340, a ride-through circuit 346 is placed in parallel with the weld current path, at the output of the transformer-based buck transformer-based buck converter 344. During the normal operation mode, the ride-through circuit 346 acts as an open circuit (switch is "OFF"), to allow the weld current to follow its normal path. When the rapid current decrease is needed for the weld, the ride-through circuit 346 acts as a short circuit with a low resistance to redirect the weld current and achieve a high rate of current decrease.

Various designs and/or topologies may be used in implementing the transformer-based DC-to-DC buck converters and the output circuits. Example implementations of transformer-based DC-to-DC buck converters and the output circuits (recycler circuits and ride-through circuits) that may be utilized are described in more detail below.

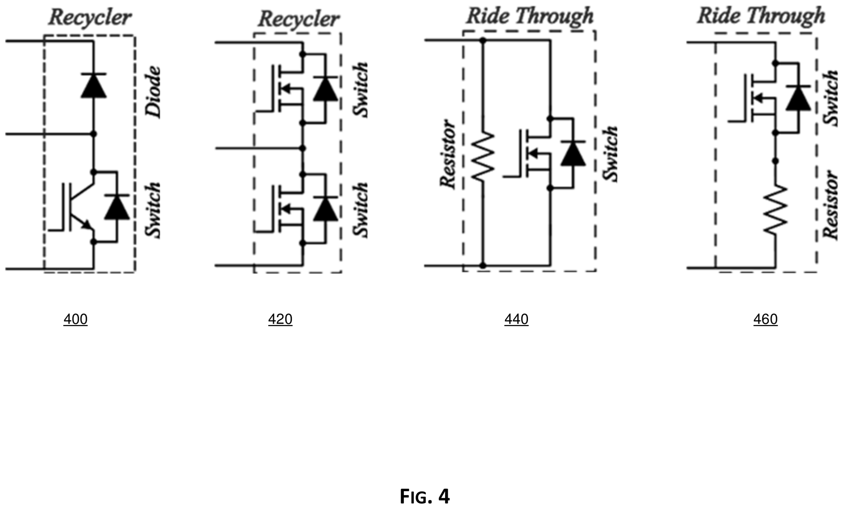

Fig. 4 illustrates different example output control circuits that may be used in transformer-based power converter topologies. Shown in Fig. 4 are circuits 400, 420, 440, and 460. As shown in Fig. 4, the circuit 400 comprises a non-synchronous recycler circuit, the circuit 420 comprises a synchronous recycler circuit, the circuit 440 comprises a series ride-through circuit, and the circuit 460 comprises a parallel ride-through circuit.

In this regard, when used within a transformer-based power converter topology as described herein, a recycler circuit may be configured to pump the energy back to the input (DC link) of the converter during the rapid current withdrawn period ( $-\Delta i/\Delta t$ ), whereas a ride-through circuit may be configured to dissipate the energy withdrawn period ( $-\Delta i/\Delta t$ ), such as in a resistor.

Each of the circuits 400, 420, 440, and 460 may comprise one or more switches. In this regard, each switch may comprise a switch transistor and a switch diode. The switch transistor may comprise metal-oxide-semiconductor field-effect transistor (MOSFET) or insulated-gate bipolar transistor (IGBT). The switch diode may be connected between two terminals of the switch transistor-e.g., between a source terminal and a drain terminal of a MOSFET switch transistor, or between an emitter terminal and a collector terminal of an IGBT switch transistor. In some instances, the switch transistor may comprise a plurality of transistors arranged in parallel. In some instances, at least some of the transistors in the plurality of transistors may be of different type compared to other transistors in the plurality of transistors.

The circuit 400 comprises a two-quadrant recycler circuit. In this regard, as shown in Fig. 4, the recycler circuit 400 comprises a switch and a diode, with the switch positioned at the low-side of the circuit while the diode is at the high-side of the circuit. When used within a transformer-based power converter topology as described herein, the midpoint of the circuit 400 may be connects to the "work", source of the MOSFET (or the emitter of the IGBT) connects to the shared ground of the converter, and the cathode of the diode connecting to the positive side of the DC link at the input of the converter.

The circuit 420 comprises a four-quadrant recycler. In this regard, as shown in Fig. 4, the recycler circuit 420 comprises two switches, with one switch positioned at the low-side of the circuit and the other switch positions at the high-side of the circuit, as shown. When used within a transformer-based power converter topology as described herein, similar to the two-quadrant recycler, the midpoint of this circuit connects to the "work", source of the low-side MOSFET (or the emitter of the low-side IGBT) connects to the connects to the shared ground of the converter, and the source of the high-side MOSFET (or collector of the high-side IGBT) connects to the positive side of the DC link at the input of the converter.

The circuit 440 comprises a series ride-through. In this regard, as shown in Fig. 4, the ride-through circuit 440 comprises switch placed in parallel with a resistor. When used within a transformer-based power converter topology as described herein, circuit 440 is placed in series with the output of the converter. The switch is in the ON state to conduct the weld current in most cases and turns off only when the fast transition of $-\Delta i/\Delta t$ is needed. When the switch is OFF, the resistor may dissipate the energy to achieve the desired current slope.

The circuit 460 comprises a parallel ride-through circuit. In this regard, as shown in Fig. 4, the ride-through circuit 460 comprises a switch placed in series with a resistor, with the switch at the high-side and the resistor at the low-side. However, the disclosure is not limited to such approach, and as such in implementations, a low-side switch may be used instead. When used within a transformer-based power converter topology as described herein, circuit 460 is placed in parallel at the output of the converter. In the circuit 460, the switch is normally OFF, and only when the fast transition of $-\Delta i/\Delta t$ is needed the switch turn on and lets the series resistor dissipate the energy to reach the desired current slope. In contrast to the other circuits (the two quadrant recycler circuit 400, the four quadrant recycler circuit 420, and the series ride-through circuit 440), the parallel ride-through circuit 460 may not have a switch continuously on the weld current path. This reduces the losses and demand for cooling the semiconductor devices. Moreover, this switch may only need to block the voltage at the output of the weld converter, which is typically low (e.g., may be, such as due to applicable regulation, below 113 volts).

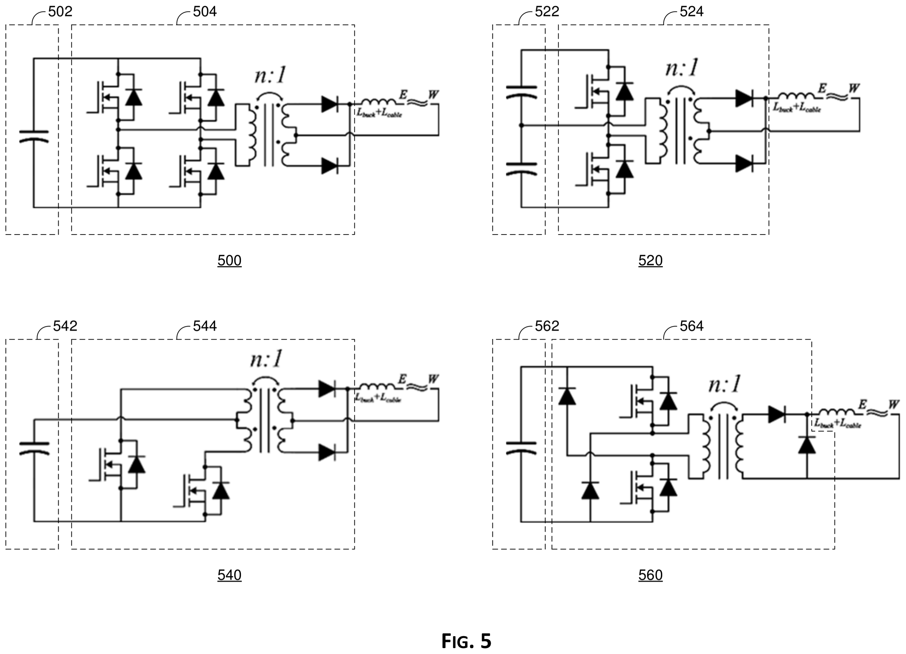

Fig. 5 illustrates different example transformer-based DC-to-DC converter circuits that may be used in transformer-based power converter topologies. Shown in Fig. 5 are converter circuits 500, 520, 540, and 560.

The converter circuits 500, 520, 540, and 560 represent four different, alternative example designs/implementations of a transformer-based DC-to-DC buck converter. In this regard, as illustrated in Fig. 5, each of the converter circuits 500, 520, 540, and 560 comprises an input circuit and a modulation circuit-namely, input circuits 502, 522, 542, and 562, and modulation circuits 504, 524, 544, and 564.

Each of the input circuits 502, 522, 542, and 562 comprises one or more capacitors, with the number of capacitor being dependent on, e.g., the particular design used for the modulation circuit. For example, single capacitor may be used in full-bridge based design, push-pull based design, and two-switch forward based design, while two capacitors may be needed when using the half-bridge based design. In this regard, in some instances, a plurality of capacitors, arranged in parallel, may be used at each capacitor position in the input circuits described herein. In other words, each capacitor position may comprise multiple capacitors connected in parallel.

Each of the modulation circuits 504, 524, 544, and 564 comprises a DC-DC step-down (n:1) transformer combined with input control components and output control components for controlling inputs and outputs of the transformer. The control components may comprise switches, diodes, and/or combinations thereof. In this regard, in each modulation circuits 504, 524, 544, and 564, switches are used for controlling inputs into of the transformer, with the switches controlled by the duty ratio of the gate pulses. Further, diodes are connected to the outputs of the transformer, for use in controlling the outputs.

In various implementations, each of the switches used in the modulation circuits 504, 524, 544, and 564 may comprise a switch transistor and a switch diode. The switch transistor may comprise metal-oxide-semiconductor field-effect transistor (MOSFET) or insulated-gate bipolar transistor (IGBT). The switch diode may be connected between two terminals of the switch transistor-e.g., between a source terminal and a drain terminal of a MOSFET switch transistor, or between an emitter terminal and a collector terminal of an IGBT switch transistor. In some instances, the switch transistor may comprise a plurality of transistors arranged in parallel. In some instances, at least some of the transistors in the plurality of transistors may be of different type compared to other transistors in the plurality of transistors.

The converter circuit 500 comprises a full-bridge transformer-based DC-to-DC converter circuit-that is, with the modulation circuit 504 incorporating full-bridge based design, with 4 switches connected in the manner shown in Fig. 5 (that is, two branches, each comprising two switches connected in series between the low-side and the high-side).

The converter circuit 520 comprises a half-bridge transformer-based DC-to-DC converter circuit-that is, with the modulation circuit 504 incorporating full-bridge based design, with 2 switches connected in the manner shown in Fig. 5 (that is, single branch comprising two switches connected between the low-side and the high-side as shown, with two capacitors in the input circuit 522, with one input of the transformer connected to the intermediate point between the two capacitors).

The converter circuit 540 comprises a push-pull transformer-based DC-to-DC converter circuit-that is, with the modulation circuit 544 incorporating push-pull based design, with 2 switches connected in the manner shown in Fig. 5 (that is, two branches, each comprising a single switch connected at the low-side).

The converter circuit 560 comprises a two-switch forward transformer-based DC-to-DC converter circuit-that is, with the modulation circuit 564 incorporating two-switch forward based design, with 2 switches and 2 diodes connected in the manner shown in Fig. 5 (that is, two branches, each comprising a switch and a diode connected in series between the low-side and the high-side, with the switch at the low-side in one branch and at the high-side in the other branch).

Nonetheless, the disclosure is not limited to example designs illustrated in Fig. 5, and any suitable design may be used. As such, in other embodiments, other designs and/or variations of designs described herein may be used in implementing transformer-based DC-to-DC converter for use in the power converter circuit topologies based on the present disclosure. For example, in some embodiments, the DC-to-DC transformer-based converter may incorporate fly-buck converter circuit, flyback converter circuit, two switch flyback converter circuit, active clamp forward converter circuit, single switch forward converter circuit, Weinberg converter circuit, phase shifted full-bridge converter circuit, LLC half-bridge converter circuit, or LLC full-bridge converter.

The addition of step-down transformer in each of these converter circuits yields improved performance compared to transformer-less converter(s). For example, the step-down transformer may assist in reducing the voltage and/or in enabling the switch duty ratio to cover a wider range. As such, the transformer-based converter may be compatible with a wider range of input voltages from different weld power supplies. This allows the converter to operate at higher input voltages compared to transformer-less topologies. As a result, for the same weld current, at higher input voltage, the primary side switches may conduct a lower current level compared to the transformer-less converters. The lower current affects both switching and conduction losses in the primary switches. However, the effect of the reduced current may be more significant in the conduction losses that are proportional to $I^2$.

The lower input current at higher voltages reduces the voltage ripple on the DC link capacitor. This means that for the same amount of capacitance, lower voltage ripple is expected which reduces losses and temperature of the capacitors and increases their lifetime. In other words, for the same amount of current ripple, less capacitance is needed that can potentially bring down the size and weight of the design. Such benefits of the transformer-based converters may make them particularly suitable for point of load (POL) welding.

In various implementations based on the present disclosure, transformer-based converters (e.g., any of the converter circuits 500, 520, 540, and 560) may be combined with adaptive output circuits (e.g., any of recycler/ride-through circuits 400, 420, 440, and 460), which are particularly suitable for enhanced control of outputs of the converter circuits. In this regard, to benefit from the merits of the transformer-based converters and the fast dynamic response of the recycler and ride-through circuits that are beneficial for, e.g., low-power processes (e.g., RMD process), the recycler and ride-through circuits may be added to the transformer-based buck converters. However, the challenge is that the transformer isolation neither allows a current path from the secondary to the input DC link capacitor nor allows a common ground between the primary and the secondary. However, in this application galvanic isolation is not required. So, recycler or ride-through circuits can bypass this isolation and reach the DC link or the primary ground. Therefore, the transformer-based buck converters with recycler/ride-through circuits can be implemented to combine the described benefits for both parts.

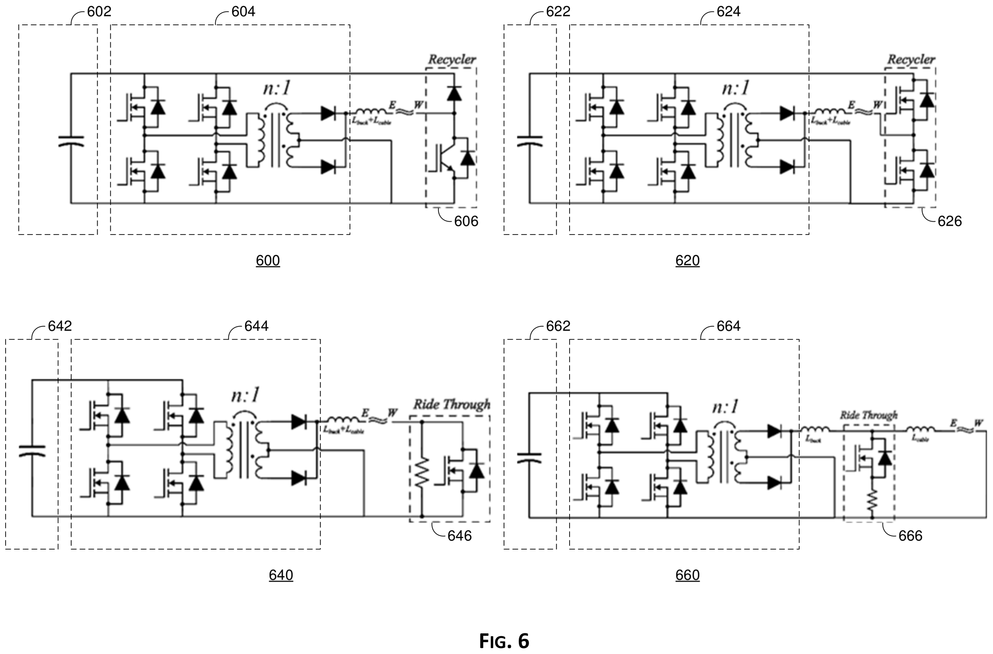

Examples of such designs/topologies, combining transformer-based DC-to-DC converter and recycler or ride-through circuits are illustrated and described in more detail with respect to Fig. 6-9.

Fig. 6 illustrates example fast response transformer-based power converter topologies based on an alternative design that incorporates full-bridge converter circuit. Shown in Fig. 6 are fast response transformer-based power converter topologies (or simply "power converters") 600, 620, 640, and 660.

Each of the power converters 600, 620, 640, and 660 comprises a transformer-based DC-to-DC converter circuit and an output circuit. In particular, each of the power converters 600, 620, 640, and 660 incorporates full-bridge transformer-based DC-to-DC converter circuit substantially similar to the full-bridge transformer-based DC-to-DC converter circuit 500, and may operate in substantially similar manner.

In this regard, as illustrated in Fig. 6, each of the power converters 600, 620, 640, and 660 comprises an input circuit and a modulation circuit-namely, input circuits 602, 622, 642, and 662, and modulation circuits 604, 624, 644, and 664. Each of the input circuits 602, 622, 642, and 662 may be substantially similar to the input circuit 502, and may operate in substantially similar manner. As such, each of the inputs circuits 602, 622, 642, and 662 may comprise a single capacitor.

The modulation circuits 604, 624, 644, and 664 are configured based on an example full-bridge converter circuit topology. In this regard, each of the modulation circuits 604, 624, 644, and 664 may be substantially similar to the modulation circuit 504, and may operate in substantially similar manner. As such, each of the modulation circuits 604, 624, 644, and 664 comprises a DC-DC step-down (n:1) transformer, 2 diodes connected to the two outputs of the transformer, and 4 switches connected to the two inputs of the transformer, with the switches arranged in full-bridge arrangement as shown in Fig. 6.

However, the power converters 600, 620, 640, and 660 differ from one another with respect to the output circuit used therein. In this regard, the power converter 600 comprises a two-quadrant recycler circuit 606, the power converter 620 comprises a four-quadrant recycler circuit 626, the power converter 640 comprises a series ride-through circuit 646, and the power converter 660 comprises a parallel ride-through circuit 666.

The two-quadrant recycler circuit 606, the four-quadrant recycler circuit 626, the series ride-through circuit 646, and the parallel ride-through circuit 666 may be substantially similar to, respectively, the two-quadrant recycler circuit 400, the four-quadrant recycler circuit 420, the series ride-through circuit 440, and the parallel ride-through circuit 460, and may operate in substantially similar manner.

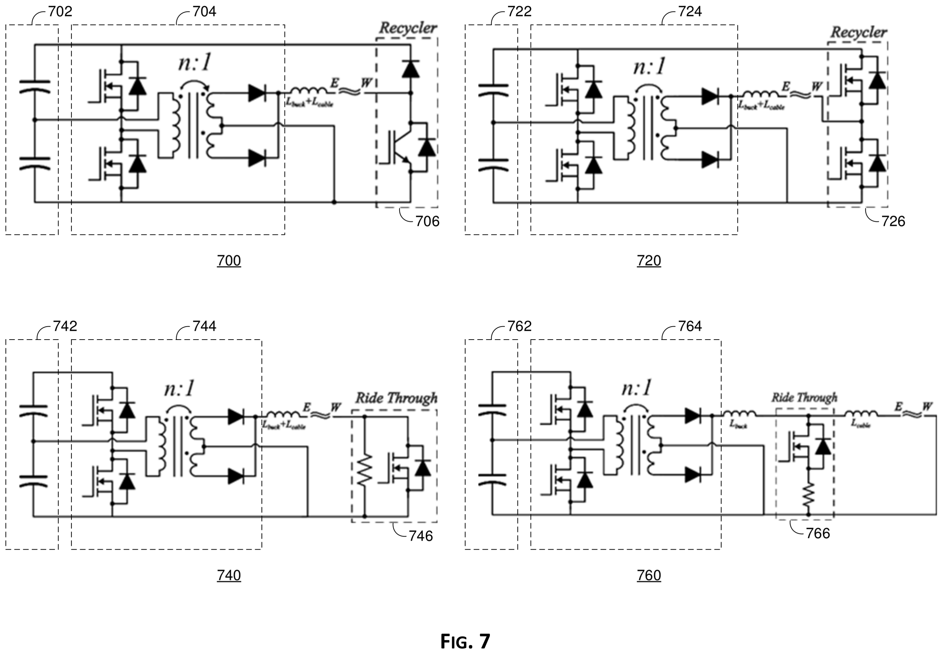

Fig. 7 illustrates example fast response transformer-based power converter topologies based on an alternative design that incorporates half-bridge converter circuit. Shown in Fig. 7 are fast response transformer-based power converter topologies (or simply "power converters") 700, 720, 740, and 760.

Each of the power converters 700, 720, 740, and 760 comprises a transformer-based DC-to-DC converter circuit and an output circuit. In particular, each of the power converters 700, 720, 740, and 760 incorporates half-bridge transformer-based DC-to-DC converter circuit substantially similar to the half-bridge transformer-based DC-to-DC converter circuit 520, and may operate in substantially similar manner.

In this regard, as illustrated in Fig. 7, each of the power converters 700, 720, 740, and 760 comprises an input circuit and a modulation circuit-namely, input circuits 702, 722, 742, and 762, and modulation circuits 704, 724, 744, and 764. Each of the input circuits 702, 722, 742, and 762 may be substantially similar to the input circuit 522, and may operate in substantially similar manner. As such, each of the inputs circuits 702, 722, 742, and 762 may comprise two capacitors connected between low-side and high-side of the input circuit, as shown in Fig. 7.

The modulation circuits 704, 724, 744, and 764 are configured based on an example half-bridge converter circuit topology. In this regard, each of the modulation circuits 704, 724, 744, and 764 may be substantially similar to the modulation circuit 524, and may operate in substantially similar manner. As such, each of the modulation circuits 704, 724, 744, and 764 comprises a DC-DC step-down (n:1) transformer, 2 diodes connected to the two outputs of the transformer, and 2 switches connected to the two inputs of the transformer, with the switches arranged in half-bridge arrangement as shown in Fig. 7. In this regard, one of the inputs of the transformer is connected to an intermediate point in the input circuit-that is, between the two capacitors.

The power converters 700, 720, 740, and 760 differ from one another with respect to the output circuit used therein. In this regard, the power converter 700 comprises a two-quadrant recycler circuit 706, the power converter 720 comprises a four-quadrant recycler circuit 726, the power converter 740 comprises a series ride-through circuit 746, and the power converter 760 comprises a parallel ride-through circuit 766.

The two-quadrant recycler circuit 706, the four-quadrant recycler circuit 726, the series ride-through circuit 746, and the parallel ride-through circuit 766 may be substantially similar to, respectively, the two-quadrant recycler circuit 400, the four-quadrant recycler circuit 420, the series ride-through circuit 440, and the parallel ride-through circuit 460, and may operate in substantially similar manner.

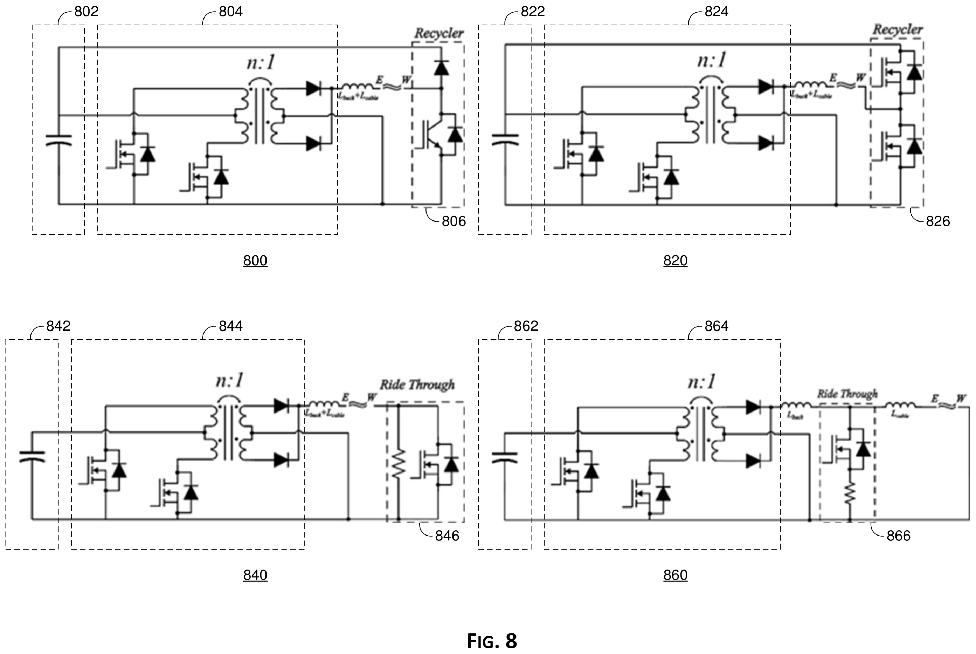

Fig. 8 illustrates example fast response transformer-based power converter topologies based on an alternative design that incorporates push-pull converter circuit. Shown in Fig. 8 are fast response transformer-based power converter topologies (or simply "power converters") 800, 820, 840, and 860.

Each of the power converters 800, 820, 840, and 860 comprises a transformer-based DC-to-DC converter circuit and an output circuit. In particular, each of the power converters 800, 820, 840, and 860 incorporates push-pull transformer-based DC-to-DC converter circuit substantially similar to the push-pull transformer-based DC-to-DC converter circuit 540, and may operate in substantially similar manner.

In this regard, as illustrated in Fig. 8, each of the power converters 800, 820, 840, and 860 comprises an input circuit and a modulation circuit-namely, input circuits 802, 822, 842, and 862, and modulation circuits 804, 824, 844, and 864. Each of the input circuits 802, 822, 842, and 862 may be substantially similar to the input circuit 542, and may operate in substantially similar manner. As such, each of the inputs circuits 802, 822, 842, and 862 may comprise a single capacitor.

The modulation circuits 804, 824, 844, and 864 are configured based on an example push-pull converter circuit topology. In this regard, each of the modulation circuits 804, 824, 844, and 864 may be substantially similar to the modulation circuit 544, and may operate in substantially similar manner. As such, each of the modulation circuits 804, 824, 844, and 864 comprises a DC-DC step-down (n:1) transformer, 2 diodes connected to the two outputs of the transformer, and 2 switches connected to the two inputs of the transformer, with the switches arranged in push-pull arrangement as shown in Fig. 8.

The power converters 800, 820, 840, and 860 differ from one another with respect to the output circuit used therein. In this regard, the power converter 800 comprises a two-quadrant recycler circuit 806, the power converter 820 comprises a four-quadrant recycler circuit 826, the power converter 840 comprises a series ride-through circuit 846, and the power converter 860 comprises a parallel ride-through circuit 866.

The two-quadrant recycler circuit 806, the four-quadrant recycler circuit 826, the series ride-through circuit 846, and the parallel ride-through circuit 866 may be substantially similar to, respectively, the two-quadrant recycler circuit 400, the four-quadrant recycler circuit 420, the series ride-through circuit 440, and the parallel ride-through circuit 460, and may operate in substantially similar manner.

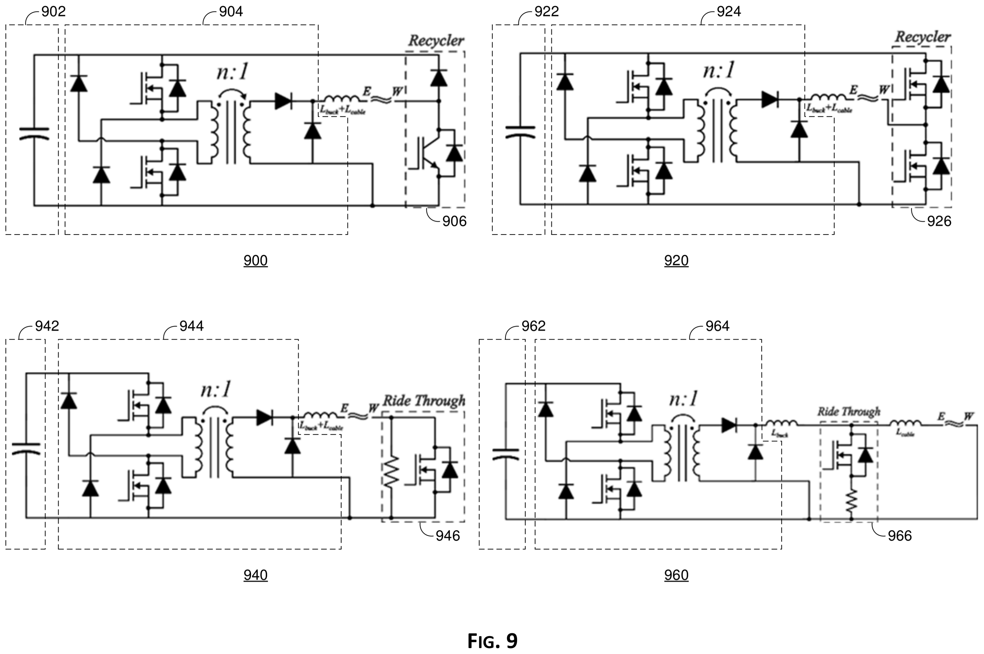

Fig. 9 illustrates example fast response transformer-based power converter topologies based on an alternative design that incorporates two-switch forward converter circuit. Shown in Fig. 9 are fast response transformer-based power converter topologies (or simply "power converters") 900, 920, 940, and 960.

Each of the power converters 900, 920, 940, and 960 comprises a transformer-based DC-to-DC converter circuit and an output circuit. In particular, each of the power converters 900, 920, 940, and 960 incorporates two-switch forward transformer-based DC-to-DC converter circuit substantially similar to the two-switch forward transformer-based DC-to-DC converter circuit 560, and may operate in substantially similar manner.

In this regard, as illustrated in Fig. 9, each of the power converters 900, 920, 940, and 960 comprises an input circuit and a modulation circuit-namely, input circuits 902, 922, 942, and 962, and modulation circuits 904, 924, 944, and 964. Each of the input circuits 902, 922, 942, and 962 may be substantially similar to the input circuit 562, and may operate in substantially similar manner. As such, each of the inputs circuits 902, 922, 942, and 962 may comprise a single capacitor.

The modulation circuits 904, 924, 944, and 964 are configured based on an example two-switch forward converter circuit topology. In this regard, each of the modulation circuits 904, 924, 944, and 964 may be substantially similar to the modulation circuit 564, and may operate in substantially similar manner. As such, each of the modulation circuits 904, 924, 944, and 964 comprises a DC-DC step-down (n:1) transformer, 2 diodes connected to the two outputs of the transformer, and 2 switches and 2 diodes connected to the two inputs of the transformer, with the switches and diodes arranged in two-switch forward arrangement as shown in Fig. 9.

The power converters 900, 920, 940, and 960 differ from one another with respect to the output circuit used therein. In this regard, the power converter 900 comprises a two-quadrant recycler circuit 906, the power converter 920 comprises a four-quadrant recycler circuit 926, the power converter 940 comprises a series ride-through circuit 946, and the power converter 960 comprises a parallel ride-through circuit 966.

The two-quadrant recycler circuit 906, the four-quadrant recycler circuit 926, the series ride-through circuit 946, and the parallel ride-through circuit 966 may be substantially similar to, respectively, the two-quadrant recycler circuit 400, the four-quadrant recycler circuit 420, the series ride-through circuit 440, and the parallel ride-through circuit 460, and may operate in substantially similar manner.

With reference to Figs. 6-9, during example operation, in the power converters 600, 620, 700, 720, 800, 820, 900, and 920 (that is, the two-quadrant recycler and four-quadrant recycler based topologies), the primary switches of the converter circuits switch to form the desired waveform at the output. The low-side switches in the recycles circuits 606, 626, 706, 726, 806, 826, 906, and 926 are ON while the current is being formed. Only when the clear phase ends, the current may rapidly decrease. Therefore, the low-side switches turn off to allow the current to recycle through the diode/high-side switch recycler circuits, DC link capacitor, and the freewheeling secondary diode of the converters.

In the power converters 640, 740, 840, and 940 (that is, the series ride-through based topologies), the primary switches of the converter circuits switch to form the desired waveform at the output. The ride-through switches of the ride-through circuits 646, 746, 846, and 946 are ON while the current is being formed. Only when the clear phase ends, the current may rapidly decrease. Therefore, the ride-through switches turn off to allow the current to pass through the ride-through resistors.

In the power converters 660, 760, 860, and 960 (that is, the parallel ride-through based topologies), the primary switches switch to form the desired waveform at the output. The ride-through switches of switches of the ride-through circuits 666, 766, 866, and 966 are OFF while the current is being formed. Only when the clear phase ends, the current may rapidly decrease. Therefore, the ride-through switches turn on to allow the current to pass through the ride-through resistors. In this case, because unlike other cases, the ride-through circuits are not in series with the weld current path, the weld cable inductance and the converters' output inductors are no longer modeled as one lumped inductor. It should be noted that based on the design parameters of the converter, the cable inductance is not included in the converter calculation during switch ON mode because the only inductance is the output inductance of the converter, or in other words, it is effectively short circuited.

Accordingly, embodiments based on the present disclosure may incorporate various improvements compared to any existing solutions. In this regard, with respect to the transformer-based converters that may be used in proposed circuit topologies, such converters may provide wider input voltage range compatibility. Further, for higher input voltages compared to the transformer-less converters, the proposed converters may exhibit or provide: 1) lower losses on the switches due to lower current level at the input, 2) less current ripple in the input DC link capacitor due to lower current level at the input (for the same capacitance and same switching frequency, lower current changes mean less ripple on the DC cap voltage), 3) for the same amount of capacitance, lower temperature and losses that may increase the capacitors lifetime, and/or 4) for the same ripple, less capacitance is needed that may reduce the size and weight of the design. As for the recycler/ride-through phase, the recycler and ride-through circuits may be developed around the transformer-based buck converters to provide rapid current decrease feature. Further, particularly in proposed the parallel ride-through circuits, the switches may not be continuously on the weld current path. This further reduces the losses and the level of cooling required for the switches.

An example welding-type system, in accordance with the present disclosure, comprises: a wire feeder controller configured for controlling wire feeding functions in the welding-type system, wherein the wire feeder controller comprises a power converter; wherein the power converter comprises a circuit topology comprising a transformer-based DC-to-DC converter circuit and an output circuit; wherein the transformer-based DC-to-DC converter circuit comprises an input circuit and a modulation circuit; wherein the modulation circuit comprises a transformer; and wherein the transformer-based DC-to-DC converter circuit is configured to not provide galvanic isolation in the output circuit.

In an example embodiment, the modulation circuit comprises one or more converter switches.

In an example embodiment, at least one converter switch comprises a converter switch transistor.

In an example embodiment, the converter switch transistor comprises metal-oxide-semiconductor field-effect transistor (MOSFET).

In an example embodiment, the converter switch transistor comprises a plurality of transistor circuits connected in parallel.

In an example embodiment, the at least one converter switch comprises a converter switch diode, and wherein the converter diode is connected between two non-gate terminals of the at least one converter switch transistor. For example, in instances where the converter switch transistor comprises a metal-oxide-semiconductor field-effect transistor (MOSFET), the converter switch diode is connected between a source terminal and a drain terminal of the MOSFET.

In an example embodiment, at least one converter switch is disposed at a low-side of the modulation circuit.

In an example embodiment, the output circuit comprises at least one of a recycler circuit, a series ride-through circuit, or a parallel ride-through circuit.

In an example embodiment, the recycler circuit comprises a recycler switch disposed at a low-side of the recycler circuit.

In an example embodiment, the recycler circuit comprises a recycler diode disposed at a high-side of the recycler circuit.

In an example embodiment, the recycler circuit comprises at least two recycler switches connected between a low-side and a high-side of the recycler circuit.

In an example embodiment, the parallel ride-through circuit comprises a ride-through switch and a resistor connected between a low-side and a high-side of the parallel ride-through circuit.

In an example embodiment, the ride-through switch is disposed at a high-side of the parallel ride-through circuit.

In an example embodiment, the resistor is disposed at a low-side of the parallel ride-through circuit.

In an example embodiment, the series ride-through circuit comprises a ride-through switch and a resistor connected in parallel between a low-side and a high-side of the output circuit.

In an example embodiment, each of the recycler circuit, the parallel ride-through circuit, and the series ride-through circuit comprises at least one output switch.

In an example embodiment, the at least one output switch comprises an output switch transistor.

In an example embodiment, the converter switch transistor comprises metal-oxide-semiconductor field-effect transistor (MOSFET).

In an example embodiment, the at least one output switch comprises an output switch diode, and wherein the output diode is connected between two non-gate terminals of the output switch transistor. For example, in instances where the output switch transistor comprises a metal-oxide-semiconductor field-effect transistor (MOSFET), the output switch diode is connected between a source terminal and a drain terminal of the MOSFET.

In an example embodiment, the input circuit comprises one or more capacitors.

In an example embodiment, the input circuit comprises at least two capacitors connected between a low-side and a high-side of the input circuit.

Another example welding-type system, in accordance with the present disclosure, comprises: a wire feeder controller configured for controlling wire feeding functions in the welding-type system, wherein the wire feeder controller comprises a power converter; wherein the power converter comprises a circuit topology comprising a transformer-based DC-to-DC converter circuit and an output circuit; wherein the transformer-based DC-to-DC converter circuit comprises an input circuit and a modulation circuit; wherein the modulation circuit comprises a transformer; and wherein the output circuit comprises a recycler circuit; wherein the recycler circuit is connected in parallel with at least the input circuit.

In an example embodiment, the modulation circuit comprises one or more converter switches.

In an example embodiment, at least one converter switch comprises a converter switch transistor.

In an example embodiment, the converter switch transistor comprises metal-oxide-semiconductor field-effect transistor (MOSFET).

In an example embodiment, the converter switch transistor comprises a plurality of transistor circuits connected in parallel.

In an example embodiment, the at least one converter switch comprises a converter switch diode, and the converter diode is connected between two non-gate terminals of the at least one converter switch transistor. For example, in instances where the converter switch transistor comprises a metal-oxide-semiconductor field-effect transistor (MOSFET), the converter switch diode is connected between a source terminal and a drain terminal of the MOSFET.

In an example embodiment, at least one converter switch is disposed at a low-side of the modulation circuit.

In an example embodiment, a low-side of the recycler circuit is connected to an output side of the transformer.

In an example embodiment, a weld current flows between an output side of the transformer and an intermediate point in the recycler circuit.

In an example embodiment, the recycler circuit comprises a recycler diode disposed at a high-side of the recycler circuit.

In an example embodiment, the recycler circuit comprises at least one recycler switch disposed at a low-side of the recycler circuit.

In an example embodiment, the recycler circuit comprises at least two recycler switches connected between a low-side and a high-side of the recycler circuit.

In an example embodiment, the at least one recycler switch comprises a recycler switch transistor.

In an example embodiment, the recycler switch transistor comprises metal-oxide-semiconductor field-effect transistor (MOSFET).

In an example embodiment, the at least one recycler switch comprises a recycler switch diode, and wherein the recycler switch diode is connected between two non-gate terminals of the recycler switch diode transistor. For example, in instances where the recycler switch transistor comprises a metal-oxide-semiconductor field-effect transistor (MOSFET), the recycler switch diode is connected between a source terminal and a drain terminal of the MOSFET.

In an example embodiment, the input circuit comprises one or more capacitors.

In an example embodiment, the input circuit comprises at least two capacitors connected between a low-side and a high-side of the input circuit.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:

Clause 1 A welding-type system, comprising:

a wire feeder controller configured for controlling wire feeding functions in the welding-type system, wherein the wire feeder controller comprises a power converter;
wherein the power converter comprises a circuit topology comprising a transformer-based DC-to-DC converter circuit and an output circuit;
wherein the transformer-based DC-to-DC converter circuit comprises an input circuit and a modulation circuit;
wherein the modulation circuit comprises a transformer; and
wherein the transformer-based DC-to-DC converter circuit is configured to not provide galvanic isolation in the output circuit.

Clause 2 The welding-type system according to clause 1, wherein the modulation circuit comprises one or more converter switches.

Clause 3 The welding-type system according to clause 2, wherein at least one converter switch comprises a converter switch transistor.

Clause 4 The welding-type system according to clause 3, wherein the at least one converter switch comprises a converter switch diode, and wherein the converter diode is connected between two non-gate terminals of the converter switch transistor.

Clause 5 The welding-type system according to clause 1, wherein the output circuit comprises at least one of a recycler circuit, a series ride-through circuit, or a parallel ride-through circuit.

Clause 6 The welding-type system according to clause 5, wherein the recycler circuit comprises at least two recycler switches connected between a low-side and a high-side of the recycler circuit.

Clause 7 The welding-type system according to clause 5, wherein the parallel ride-through circuit comprises a ride-through switch and a resistor connected between a low-side and a high-side of the parallel ride-through circuit.

Clause 8 The welding-type system according to clause 5, wherein the series ride-through circuit comprises a ride-through switch and a resistor connected in parallel between a low-side and a high-side of the output circuit.

Clause 9 The welding-type system according to clause 5, wherein each of the recycler circuit, the parallel ride-through circuit, and the series ride-through circuit comprises at least one output switch.

Clause 10 The welding-type system according to clause 1, wherein the input circuit comprises one or more capacitors.

Clause 11 A welding-type system, comprising:

a wire feeder controller configured for controlling wire feeding functions in the welding-type system, wherein the wire feeder controller comprises a power converter;
wherein the power converter comprises a circuit topology comprising a transformer-based DC-to-DC converter circuit and an output circuit;
wherein the transformer-based DC-to-DC converter circuit comprises an input circuit and a modulation circuit;
wherein the modulation circuit comprises a transformer; and
wherein the output circuit comprises a recycler circuit;
wherein the recycler circuit is connected in parallel with at least the input circuit.

Clause 12 The welding-type system according to clause 11, wherein the modulation circuit comprises one or more converter switches.

Clause 13 The welding-type system according to clause 12, wherein at least one converter switch comprises a converter switch transistor.

Clause 14 The welding-type system according to clause 13, wherein the converter switch transistor comprises a plurality of transistor circuits connected in parallel.

Clause 15 The welding-type system according to clause 13, wherein the at least one converter switch comprises a converter switch diode, and wherein the converter diode is connected between two non-gate terminals of the converter switch transistor.

Clause 16 The welding-type system according to clause 11, wherein a low-side of the recycler circuit is connected to an output side of the transformer.

Clause 17 The welding-type system according to clause 11, wherein a weld current flows between an output side of the transformer and an intermediate point in the recycler circuit.

Clause 18 The welding-type system according to clause 11, wherein the recycler circuit comprises a recycler diode disposed at a high-side of the recycler circuit.

Clause 19 The welding-type system according to clause 11, wherein the recycler circuit comprises at least one recycler switch disposed at a low-side of the recycler circuit.

Clause 20 The welding-type system according to clause 19, wherein the at least one recycler switch comprises a recycler switch transistor.

Clause 21 The welding-type system according to clause 20, wherein the at least one recycler switch comprises a recycler switch diode, and wherein the recycler switch diode is connected between two non-gate terminals of the recycler switch diode transistor.

Clause 22 The welding-type system according to clause 11, wherein the input circuit comprises one or more capacitors.

## Claims

1. A welding-type system, comprising:

a wire feeder controller configured for controlling wire feeding functions in the welding-type system, wherein the wire feeder controller comprises a power converter;
wherein the power converter comprises a circuit topology comprising a transformer-based DC-to-DC converter circuit and an output circuit;
wherein the transformer-based DC-to-DC converter circuit comprises an input circuit and a modulation circuit;
wherein the modulation circuit comprises a transformer; and
wherein the transformer-based DC-to-DC converter circuit is configured to not provide galvanic isolation in the output circuit.

2. The welding-type system according to claim 1, wherein the modulation circuit comprises one or more converter switches.

3. The welding-type system according to claim 2, wherein at least one converter switch comprises a converter switch transistor and optionally, wherein the at least one converter switch comprises a converter switch diode, and wherein the converter diode is connected between two non-gate terminals of the converter switch transistor.

4. The welding-type system according to claim 1, wherein the output circuit comprises at least one of a recycler circuit, a series ride-through circuit, or a parallel ride-through circuit.

5. The welding-type system according to claim 4, wherein the recycler circuit comprises at least two recycler switches connected between a low-side and a high-side of the recycler circuit, or wherein the parallel ride-through circuit comprises a ride-through switch and a resistor connected between a low-side and a high-side of the parallel ride-through circuit.

6. The welding-type system according to claim 4, wherein the series ride-through circuit comprises a ride-through switch and a resistor connected in parallel between a low-side and a high-side of the output circuit or
wherein each of the recycler circuit, the parallel ride-through circuit, and the series ride-through circuit comprises at least one output switch.

7. The welding-type system according to claim 1, wherein the input circuit comprises one or more capacitors.

8. A welding-type system, comprising:

a wire feeder controller configured for controlling wire feeding functions in the welding-type system, wherein the wire feeder controller comprises a power converter;

wherein the power converter comprises a circuit topology comprising a transformer-based DC-to-DC converter circuit and an output circuit;

wherein the transformer-based DC-to-DC converter circuit comprises an input circuit and a modulation circuit;

wherein the modulation circuit comprises a transformer; and

wherein the output circuit comprises a recycler circuit;

wherein the recycler circuit is connected in parallel with at least the input circuit.

9. The welding-type system according to claim 8, wherein the modulation circuit comprises one or more converter switches.

10. The welding-type system according to claim 9, wherein at least one converter switch comprises a converter switch transistor.

11. The welding-type system according to claim 10, wherein the converter switch transistor comprises a plurality of transistor circuits connected in parallel or

wherein the at least one converter switch comprises a converter switch diode, and wherein the converter diode is connected between two non-gate terminals of the converter switch transistor.

12. The welding-type system according to claim 8, wherein a low-side of the recycler circuit is connected to an output side of the transformer or

wherein a weld current flows between an output side of the transformer and an intermediate point in the recycler circuit or

wherein the recycler circuit comprises a recycler diode disposed at a high-side of the recycler circuit.

13. The welding-type system according to claim 8, wherein the recycler circuit comprises at least one recycler switch disposed at a low-side of the recycler circuit, and optionally,

wherein the at least one recycler switch comprises a recycler switch transistor.

14. The welding-type system according to claim 13, wherein the at least one recycler switch comprises a recycler switch diode, and wherein the recycler switch diode is connected between two non-gate terminals of the recycler switch diode transistor.

15. The welding-type system according to claim 8, wherein the input circuit comprises one or more capacitors.

**FIG. 1**

**RMD Ball Transfer**

**FIG. 2**

EP 4 755 563 A1

**FIG. 3**

**Fig. 4**

**FIG. 5**

**FIG. 6**

**FIG. 7**

**FIG. 8**

FIG. 9

EP 4 755 563 A1

Europäisches
Patentamt
European
Patent Office
Office européen
des brevets

## EUROPEAN SEARCH REPORT

**Application Number**

EP 25 22 0172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/159734 A1 (ILLINOIS TOOL WORKS [US]; SALSICH ANTHONY VAN BERGEN [US]) 22 December 2011 (2011-12-22) * paragraph [0025] - paragraph [0030]; figure 3 * ----- | 1-15 | INV. B23K9/10 H02M3/00 |

**TECHNICAL FIELDS SEARCHED (IPC)**

B23K
H02M

The present search report has been drawn up for all claims

| Place of search | Date of completion of the search | Examiner |
|---|---|---|
| Munich | 2 April 2026 | De Backer, Tom |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 0172

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | Publication date | Patent family member(s) | | Publication date |
|---|---|---|---|---|
| WO 2011159734 A1 | 22-12-2011 | CN | 102947041 A | 27-02-2013 |
| | | EP | 2582483 A1 | 24-04-2013 |
| | | US | 2011309054 A1 | 22-12-2011 |
| | | US | 2015375329 A1 | 31-12-2015 |
| | | US | 2020376582 A1 | 03-12-2020 |
| | | WO | 2011159734 A1 | 22-12-2011 |

EPO FORM P0459

For more details about this annex : see Official Journal of the European Patent Office, No. 12/82

**EP 4 755 563 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63728461